Europäisches Patentamt

European Patent Office

Office européen des brevets

(11) Publication number: **0 314 482**
**A1**

# EUROPEAN PATENT APPLICATION

(21) Application number: 88310124.8

(51) Int. Cl.⁴: **B 01 D 53/34**

(22) Date of filing: 27.10.88

(30) Priority: 28.10.87 US 113315

(43) Date of publication of application:
03.05.89 Bulletin 89/18

(84) Designated Contracting States:
CH DE FR GB IT LI NL SE

(71) Applicant: **SOLARCHEM ENTERPRISES INC.**
**40 West Wilmot Street, Unit 5**
**Richmond Hill Ontario L4B 1H8 (CA)**

(72) Inventor: **Stevens, R.D. Samuel**
**82 Charnwood Place**
**Thornhill Ontario L3T 5H3 (CA)**

**Brown, Pauline Macura**
**201 Donlea Drive**
**Toronto Ontario M4G 2N1 (CA)**

(74) Representative: **Lambert, Hugh Richmond et al**
**D. YOUNG & CO. 10 Staple Inn**
**London, WC1V 7RD (GB)**

(54) A method of treating an oxidizable organic contaminant in a gas stream.

(57) A method of treating an oxidizable organic contaminant in an industrial exhaust air stream. The temperature of the gas stream is maintained at substantially greater than room temperature. Ozone is added to the gas stream to oxidize the contaminants having a reaction rate constant at 300°C with $O[^3P]$ between about $10^{-11}$ and $10^{-16}$ cm³/mol.sec.

EP 0 314 482 A1

Bundesdruckerei Berlin

**Description**

## A METHOD OF TREATING AN OXIDIZABLE ORGANIC CONTAMINANT IN A GAS STREAM

This invention relates to a method of treating an oxidizable organic contaminant in a gas stream, particularly but not exclusively, suitable for the removal of oxidizable malodorous and toxic contaminants from industrial exhaust air streams.

Many organic contaminants are malodorous or toxic and therefore are offensive and undesirable even in small quantities. It is therefore desirable to remove them as completely as possible from, for example, an industrial exhaust air stream. Typical industries where the process described here can be used include after incinerators, large volume fast food outlets, paint spraying operations and plastic and resin manufacturing operations.

However, while there are existing technologies for the removal of organic contaminants having a high concentration in these air streams, it becomes increasingly difficult and more expensive to remove the contaminants when these concentrations become lower, for example, in the order of one ppm.

In co-pending US application serial No. 912,016, the inventors describe a process for the efficient removal of an oxidizable malodorous or toxic contaminant from an industrial exhaust air stream in which ozone and ultraviolet radiation are applied to the air stream at a temperautre of about 25°C.

According to the present invention, there is provided a method of treating an oxidizable organic contaminant in a gas stream comprising adding ozone to the gas stream to oxidize contaminants having a reaction rate constant at 300°C with $O[^3P]$ between about $10^{-11}$ and $10^{-16}$ $cm^3/mol.sec.$, the temperature of the gas stream being greater than 250°C and less than 800°C.

The inventors have found, by analyzing the reaction occurring in the air stream using methods from atmospheric chemistry, that, at temperatures substantially greater than room temperature, the dominant decomposition mechanism for a wide class of oxidizable malodorous or toxic organic contaminants having a reaction rate constant with $O(^3P)$ at 300°C between about $10^{-11}$ and $10^{-16}$ $cm^3/mol.sec.$ is the reaction of that oxidizable malodorous or toxic gas with $O(^3P)$, which is one of the products formed by the decomposition of ozone. The inventors have found that at temperatures substantially greater than 23°C, ozone decomposition produces a relatively large quantity of the radical $O(^3P)$ that allows the efficient removal of such organic contaminants.

The ozone decomposition removal mechanism is:

1. $O_3 + M \rightarrow O(^3P) + O_2 + M$
2. $O(^3P) + O_2 + M \rightarrow O_3 + M$
3. $O(^3P) + O_3 \rightarrow 2O_2$ where M is any molecular species.

As the temperature increases, reaction (1) becomes faster, while reaction (2) becomes slower. The $O(^3P)$ radicals therefore accumulate. These radicals are highly oxidative and can attack organic molecules (X) by:

4. $O(^3P) + X \rightarrow$ products.

If reaction (4) is fast enough to compete with reaction (3) at a given temperature, then substantial destruction of the organic compound in the air can take place. If the concentration of ozone is too high, or the temperature of the gas is too high, the relative rate of reaction (4) to reaction (3) is small. The amount of organic compound that is destroyed will therefore be small in comparison to the ozone removal (destruction) rate. A relatively high ozone removal rate is undesirable because ozone is expensive. Similarly, it is not desirable to add excessive quantities of ozone to the air stream to oxidize contaminants. Thus it is an object of the present invention to optimize the ozone efficiency of the removal process.

At temperatures greater than about 800°C, little improvement has been found by the inventors in the removal of the contaminant in terms of ozone and heat efficiency, because equation (3) becomes increasingly more important with temperature. In addition, above about 800°C the contaminant becomes incinerated.

To predict the appropriate temperature at which to operate the process, the reaction rate constant of the oxidizable organic contaminant must be known as a function of temperature.

In one embodiment of the invention, the efficient removal of virtually all of an oxidizable organic contaminant having a reaction rate constant with $O(^3P)$ between about $10^{-11}$ and $10^{-16}$ $cm^3/mol.sec.$ from an industrial exhaust air stream may be obtained by adding ozone to the industrial exhaust air stream at temperatures substantially greater than room temperature without using ultraviolet radiation. The optimal amount of ozone required may be determined by numerically integrating over time a set of differential equations expressing the reactions occurring in the air stream.

If the initial conditions of: (1) quantity of oxidizable organic contaminant, (2) temperature T, and (3) removal efficiency of the contaminant are specified, then the quantity of ozone required may be determined.

Further summary of the invention is found in the claims forming part of this patent.

### Brief Description of the Drawings

A detailed description of the invention by way of example, together with a description of the principle of operation of the invention, will now be given with reference to the drawings in which:

Figure 1 is a graph summarizing data obtained by modelling the decomposition mechanism for xylene showing the percentage removal of xylene as a function of distance along an industrial exhaust air stream duct;

Figure 2 is a graph summarizing data obtained by modelling the decomposition mechanism for xylene showing the percentage removal of xylene as a function of temperature;

Figure 3 is a graph showing in a different form the results of Figures 1 and 2;

Figure 4 is a graph summarizing modelling data obtained by modelling the decomposition mechanism for methylethylketone (MEK) showing the percentage removal of methylethylketone as a function of distance along an industrial exhaust air stream duct; and

Figure 5 is a graph summarizing data obtained by modelling the decomposition mechanism for MEK showing the percentage removal of MEK as a function of temperature and the stoichiometric ratio of $O_3$ to MEK.

## Description of the Preferred Embodiments

In any industrial exhaust air stream, a wide variety of chemical reactions are constantly occurring. The actual reactions and their rates depend in part on the gases present, their concentration and the temperature of the air stream. Although it is not possibe to model all occurring reactions, the dominant reactions in an air stream may be identified (as shown in Table 1) and modelled.

### Table 1

| Primary Core Inorganic Reactions | Rate Constant Expression $(cm^3/mol.sec.)$ |
|---|---|
| (1) $O_3 + M \rightarrow O(^3P) + O_2 + M$ | $7.65 \times 10^{-9}\ \exp(-24000/RT)$ |
| (2) $O(^3P) + O_2 + M \rightarrow O_3 + M$ | $2.59 \times 10^{-35}\ \exp(1700/RT)\ [M]$ |
| (3) $OH + OH + M \rightarrow H_2O_2 + M$ | $6.5 \times 10^{-31}\ (T/300)^{-0.7}[M]$ |
| (4) $OH + OH \rightarrow O(^3P) + H_2O$ | $1.05 \times 10^{-11}\ \exp(-1100/RT)$ |
| (5) $OH + H_2O_2 \rightarrow H_2O + HO_2$ | $1.66 \times 10^{-11}\ \exp(-1200/RT)$ |
| (6) $OH + O_3 \rightarrow HO_2 + O_2$ | $1.9 \times 10^{-12}\ \exp(-1000/T)$ |
| (7) $OH + HO_2 \rightarrow H_2O + O_2$ | $3.46 \times 10^{-12}\ \exp(670/T)$ |
| (8) $HO_2 + HO_2 \rightarrow H_2O_2 + O_2$ | $4.5 \times 10^{-14}\ \exp(1200/T)$ |
| (9) $HO_2 + O_3 \rightarrow OH + 2O_2$ | $1.4 \times 10^{-14}\ \exp(-600/T)$ |
| (10) $O(^3P) + O_3 \rightarrow 2O_2$ | $2.0 \times 10^{-11}\ \exp(-4800/RT)$ |

(11) $H_2O_2 \rightarrow 2OH$      $*1.0 \times 10^{13} \exp(-48000/RT)$

(12) $O(^3P) + H_2O \rightarrow 2OH$      $1.13 \times 10^{-10} \exp(-18400/RT)$

(13) $O(^3P) + H_2O_2 \rightarrow OH + HO_2$      $2.56 \times 10^{-12} \exp(-4200/RT)$

(14) $CO + OH \rightarrow H + CO_2$      $1.18 \times 10^{-11} \exp(-3875/T)$

(15) $H + O_2 \xrightarrow{(M)} HO_2$      $2.5 \times 10^{-10}$

| Secondary Core Inorganic Reactions | Rate Constant Expression $cm^3$/mol.sec. |
|---|---|
| (16) $NO + O_3 \rightarrow NO_2 + O_2$ | $2.35 \times 10^{-12} \exp(-1459)/T$ |
| (17) $NO_2 + O_3 \rightarrow NO_3 + O_2$ | $4.27 \times 10^{-13} \exp(-2516/T)$ |
| (18) $NO + OH \xrightarrow{(M)} NO_2 + H$ | $1 \times 10^{-11}$ |
| (19) $HO_2 + NO \rightarrow OH + NO_2$ | $2.0 \times 10^{-11} \exp(-604/T)$ |
| (20) $NO + O(^3P) \xrightarrow{(M)} NO_2$ | $3.0 \times 10^{-11} (T/300)^{0.3}$ |
| (21) $NO_2 + O(^3P) \xrightarrow{(M)} NO_3$ | $2.2 \times 10^{-11}$ |
| (22) $NO_3 + O(^3P) \rightarrow O_2 + NO_2$ | $1.0 \times 10^{-11}$ |
| (23) $NO_2 + OH \rightarrow HONO_2$ | $3.5 \times 10^{-11}$ |
| (24) $OH + HONO_2 \rightarrow H_2O + NO_3$ | $1.5 \times 10^{-14} \exp(650/T)$ |
| (25) $NO_2 + M \rightarrow NO + O(^3P) + M$ | $1.8 \times 10^{-8} \exp(-33,000/T)$ |
| (26) $Cl + H_2 \rightarrow HCl + H$ | $4.7 \times 10^{-11} \exp(-2340/T)$ |
| (27) $Cl + HO_2 \rightarrow HCl + O_2$ | $4.8 \times 10^{-11}$ |
| (28) $Cl + H_2O_2 \rightarrow HCl + HO_2$ | $1.1 \times 10^{-11} \exp(-980/T)$ |
| (29) $Cl + O_3 \rightarrow ClO + O_2$ | $3.1 \times 10^{-11} \exp(-302/T)$ |
| (30) $ClO + OH \rightarrow HO_2 + Cl$ | $9.1 \times 10^{-12}$ |
| (31) $ClO + O(^3P) \rightarrow O_2 + Cl$ | $7.5 \times 10^{-11} \exp(-120/T)$ |
| (32) $ClO + O_3 \rightarrow Cl + 2O_2$ | $5 \times 10^{-15}$ |
| (33) $SO_2 + OH \xrightarrow{(M)} HOSO_2$ | $2.5 \times 10^{-12}$ |
| (34) $SO_2 + O(^3P) \xrightarrow{(M)} SO_3$ | $1.4 \times 10^{-14}$ |

* Unimolecular rate constants, units are $s^{-1}$

Variable Reactions [X = Target Contaminant]

| | | | | |
|---|---|---|---|---|
| (1) | OH + X | $\longrightarrow$ | (products) | ) |
| (2) | O($^3$P) + X | $\longrightarrow$ | (products) | ) PRIMARY OR TARGET<br>) CONTAMINANT REACTIONS |
| (3) | O$_3$ + X | $\longrightarrow$ | (products) | ) |

| | | | | |
|---|---|---|---|---|
| (4) | Product 1 + OH | $\longrightarrow$ | END PRODUCTS | ) |
| (5) | Product 2 + OH | $\longrightarrow$ | END PRODUCTS | ) OH REACTIONS |
| | . | | | ) |
| | . | | | ) |
| | . | | | ) |
| (n+3) | Product n + OH | $\longrightarrow$ | END PRODUCTS | ) |

| | | | | |
|---|---|---|---|---|
| (n+4) | Product 1 + O($^3$P) | $\longrightarrow$ | END PRODUCTS | ) |
| (n+5) | Product 2 + O($^3$P) | $\longrightarrow$ | END PRODUCTS | ) O($^3$P) REACTIONS |
| | . | | | ) |
| | . | | | ) |
| | . | | | ) |
| (2n+3) | Product n + O($^3$P) | $\longrightarrow$ | END PRODUCTS | ) |

| | | | | |
|---|---|---|---|---|
| (2n+4) | Product 1 + O$_3$ | $\longrightarrow$ | END PRODUCTS | ) |
| (2n+5) | Product 2 + O$_3$ | $\longrightarrow$ | END PRODUCTS | ) O$_3$ REACTIONS |
| | . | | | ) |
| | . | | | ) |
| | . | | | ) |
| (3n+3) | Product n + O$_3$ | $\longrightarrow$ | END PRODUCTS | ) |

In Table 1 and elsewhere in the specification and claims, M represents any molecular species, typically $N_2$ or $O_2$. The rate constant for each equation at a certain temperature may be found by substituting the temperature T in the appropriate expression at the right hand side of Table 1. The units in the exponential expressions are non-dimensional, and where T appears with R, R has been subsumed in the numerator of the expression.

The rate expression for each reaction is a differential equation and the reactions occurring within an industrial exhaust air stream may be modelled by numerically integrating these equations on a computer, for example, as described in Gear C.W., "The Automatic Integration of Ordinary Differential Equations", Common ACM, 14, page 176 (1971). Certain of the rate constants specified in this table, and other tables appearing in this patent, are subject to slight uncertainties owing to conflicting reports in the literature. However, the effect of the uncertainties on the resultant rates of removal of contaminant has been found to be sufficiently small to be neglible.

The following is a summary of the modelling process. Firstly, the primary core inorganic reactions must be entered into the computer. In addition, the variable reactions for the specific compound must be entered. Examples of these variable reactions are given above. Also, the initial concentrations of ozone ($O_3$), target compound (X), water ($H_2O$), and carbon monoxide (CO), the time over which the reactions are to be integrated, temperature T, and the velocity of the air stream must be specified. If $NO_X$ (that is, NO, $NO_2$) is formed or initially present in the reaction mixture, then the secondary core inorganic reactions 16-25 and the initial NO and $NO_2$ concentrations must be entered. If HCl or Cl radicals are formed, then the secondary core inorganic reactions 26-32, and the initial Cl and ClO concentrations must be specified. If $SO_2$ is formed or present initially in the reaction mixture, then the secondary core inorganic reactions 33 and 34, and the initial $SO_2$ concentration must be specified. The reaction with CO is important for example in incinerators, but is not generally important.

The solutions obtained will show the remaining concentration of target contaminant, and knowing the time over which the equations are integrated, therefore will give the removal efficiency. The initial concentration of temperature and ozone may then be varied until the desired removal efficiency is obtained.

In a typical industrial exhaust duct, the flow rate will be about 5 meters per second, the length of duct will be in the order of 5 meters, and accordingly the desired removal efficiency must be obtained within about one second. For shorter duct lengths, or lower flow rate, greater efficiency will be required.

Table 2 shows examples of target organic contaminants and their rate constant with $O(^3P)$ at 300°C. The process described here can be applied to any of the target contaminants listed in Table 2 to determine the ozone concentration required and the temperatures for optimal efficiency, and to any oxidizable organic contaminant, whose rate constants are known. Because of the desirabilty of removing even very low concentrations of malodorous contaminants, the process has particular application to such contaminants.

Due to the varying rate constants of those contaminants with $O(^3P)$, OH and $O_3$, and the varying rate constants of their products of decomposition with OH, $O(^3P)$ and $O_3$, it is not possible to predict, without modelling the reactions, at what temperatures and with what ozone concentrations a desired removal efficiency may be obtained. Xylene and methyl ethyl ketone were chosen as representative of the aromatics and ketones respectively and modelled as discussed below. Further information on the rate constants of the various target contaminants and their products with the radicals of concern may be obtained from, for example, Herron, John T. and Huie Robert E., Rate Constants for the Reactions of Atomic Oxygen $O(^3P)$ with Organic Compounds in the Gase Phase, J. Phys. Chem. Ref. Data Vol. 2. No. 3, 1973.

Table 2

Examples of Target Contaminants and Rate Constants with

$O(^3P)$

|  | Rate Constant $O(^3P)$ (at 300°C) |
| --- | --- |
| Aromatics | |
| Benzene | $1.7 \times 10^{-12}$ |
| Ethylbenzene | $2.3 \times 10^{-11}$ |
| Toluene | $2.5 \times 10^{-12}$ |
| Xylene | $5.4 \times 10^{-12}$ |
| Ketones | |
| Methyl ethyl ketone | $1.8 \times 10^{-13}$ |
| Acetone | $1.0 \times 10^{-15}$ |
| Ethers | |
| Dimethyl Ether | $1.0 \times 10^{-12}$ |
| Alcohols | |
| Methanol | $2.4 \times 10^{-13}$ |
| Isopropanol | $3.3 \times 10^{-13}$ |
| Aldehydes | |
| Formaldehyde | $3.0 \times 10^{-12}$ |
| Acetaldehyde | $4.3 \times 10^{-12}$ |

```
Chlorinated Hydrocarbons
     Chloromethane               1.2 x 10^{-13}
     2-Chlorobutane              1.4 x 10^{-12}
     Chlorobenzene               2.6 x 10^{-14}

Alkanes
     Heptane                     8.3 x 10^{-12}
     Dimethylpropane             1.3 x 10^{-12}
     Cyclohexane                 1.1 x 10^{-11}
     Methane                     3.9 x 10^{-14}

Alkenes
     Ethylene                    2.4 x 10^{-12}
     1-Butene                    7.3 x 10^{-12}
     Propene                     3.9. x 10^{-12}

Nitrogen Containing Organics
     Pyridine                    7.1 x 10^{-12}
```

With organic contaminants listed in Table 2. the process will operate at temperatures substantially greater than room temperature, above about 250°C and below about 800°C. Below about 800°C the reaction of ozone with $0(^3P)$ begins to dominate and the process becomes less effective. In addition, above about 800°C, incineration becomes an effective remover of contaminants.

Example 1

The inventors have modelled the equations for the process described here as applied to the oxidization of xylene. The model assumed an industrial exhaust duct of arbitrary dimensions but having specified flow rate. Temperature of the gas stream, the initial concentrations of xylene and ozone and the concentrations of water and carbon monoxide were specified in advance and as, for example, described below. The modelling used the Gear process described above and was carried out on a commercially available microcomputer.

Table 3 shows the mechanism for the high temperature oxidization of xylene. In that table, equation 3 need not have been included but is given to show the relative rates of reactions of the three oxidants (OH, $0(^3P)$, $O_3$) with xylene. The reaction of the products with $O_3$ have not been included as they are not a competitive reaction pathway.

Table 3

Mechanism for High Temperature Oxidation of Xylene

| Variable Reactions | Rate Constant $(cm^3/mol.sec.)$ |
|---|---|

(1) OH + Xylene $\longrightarrow$ 0.056 TLA + 0.334 $HO_2$ + 0.278 PHEN + 0.556 PAR + 1.332 MGLY  $\qquad$ $8.33 \times 10^{-12} \exp \left(\dfrac{627}{RT}\right)$

(2) $O(^3P)$ + Xylene $\longrightarrow$ 0.056 TLA + 0.334 $HO_2$, 0.278 PHEN + 0.556 PAR + 1.332 MGLY  $\qquad$ $3.78 \times 10^{-11} \exp\left(\dfrac{-1350}{T}\right)$

(3) $O_3$ + Xylene $\longrightarrow$ PRODUCTS ($CO_2$ + $H_2O$)  $\qquad$ $5.6 \times 10^{-20} \exp\left(\dfrac{-2200}{RT}\right)$

(4) TLA + OH $\longrightarrow$ END PRODUCTS ($CO_2$) + $H_2O$)  $\qquad$ $1.3 \times 10^{-11}$

(5). PHEN + OH $\longrightarrow$ END PRODUCTS ($CO_2$ + $H_2O$)  $\qquad$ $5.0 \times 10^{-11}$

(6) PAR + OH $\longrightarrow$ END PRODUCTS ($CO_2$ + $H_2O$)  $\qquad$ $4.8 \times 10^{-12} \exp(129/T)$

(7) MGLY + OH $\longrightarrow$ END PRODUCTS ($CO_2$ + $H_2O$)  $\qquad$ $1.73 \times 10^{-11}$

(8) TLA + $O(^3P)$ $\longrightarrow$ END PRODUCTS ($CO_2$ + $H_2O$)  $\qquad$ $8.3 \times 10^{-12} \exp\left(\dfrac{-2700}{RT}\right)$

(9) PHEN + $O(^3P)$ $\longrightarrow$ END PRODUCTS ($CO_2$ + $H_2O$)  $\qquad$ $8.3 \times 10^{-12} \exp\left(\dfrac{-2700}{RT}\right)$

(10) PAR + $O(^3P)$ $\longrightarrow$ END PRODUCTS ($CO_2$ + $H_2O$)  $\qquad$ $2.2 \times 10^{-14} \exp\left(\dfrac{-4170}{RT}\right)$

(11) MGLY + $O(^3P)$ $\longrightarrow$ END PRODUCTS ($CO_2$ + $H_2O$)  $\qquad$ $5.1 \times 10^{-14} \exp\left(\dfrac{-2099}{T}\right)$

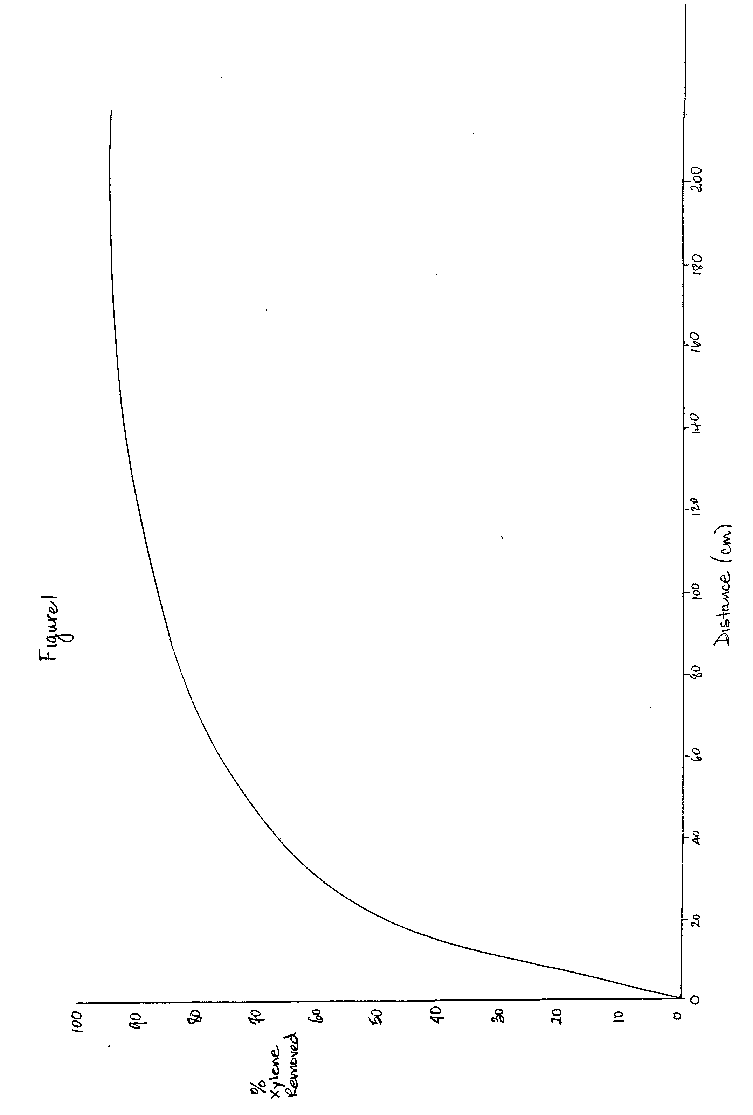

In that table, TLA is toluenealdehyde, PHEN is a phenol-type product, PAR is a paraffin radical, MGLY is methyl glyoxal radical, R is 1.987 cal/mol.K and T is the temperature in degrees Kelvin. Using this model of the mechanism for the high temperature oxidization of xylene, the results shown in Figures 1, 2 and 3 were obtained.

In Figure 1 is shown the percentage of the xylene removed as a function of distance along an industrial exhaust duct. The data for this graph were obtained with a temperature of 300°C, an air velocity of 4.8m/s, an initial xylene concentration of 19.2 ppm, and an initial ozone concentration of 53.8 ppm (equivalent stoichiometric ratio of ozone to xylene is 2.8.) For the modelling, these variable reactions for xylene were input into the computer along with the core reactions specified in Table 1. For each of Figures 1 to 5, water was present in the amount of $6.3 \times 10^{17}$ molecules/cm³ and CO was present in 10 ppm. Thus, with the initial conditions stated above, xylene will be removed from the air stream with greater than 90% efficiency in two meters of travel. Increasing the amount of ozone at 300°C results in increased xylene removal for a given contact time.

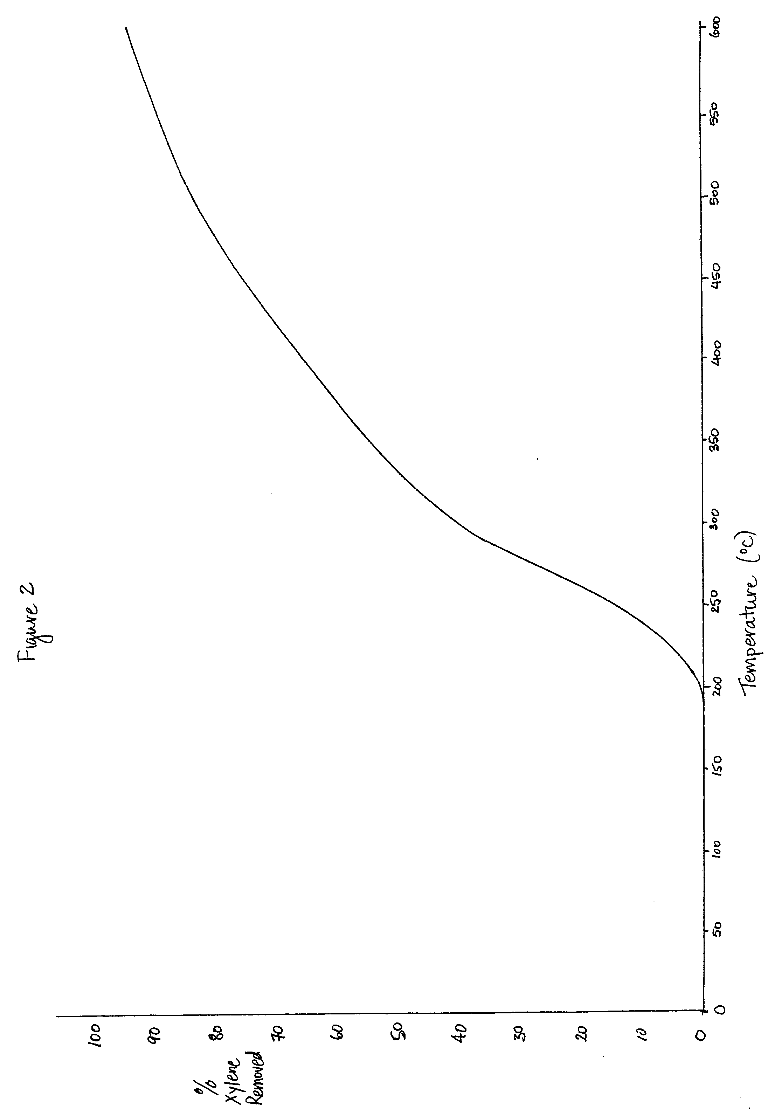

In Figure 2, the initial conditions were as follows:

Air velocity is 4.8 m/s, distance travelled is 1 m., the initial xylene concentration is 19.2 ppm and the stoichiometric ratio of ozone to xylene is 1.1. From that figure, it can be seen that the percentage of xylene removed increases rapidly above about 250°C, reaching over 80% removal efficiency at near 500°C.

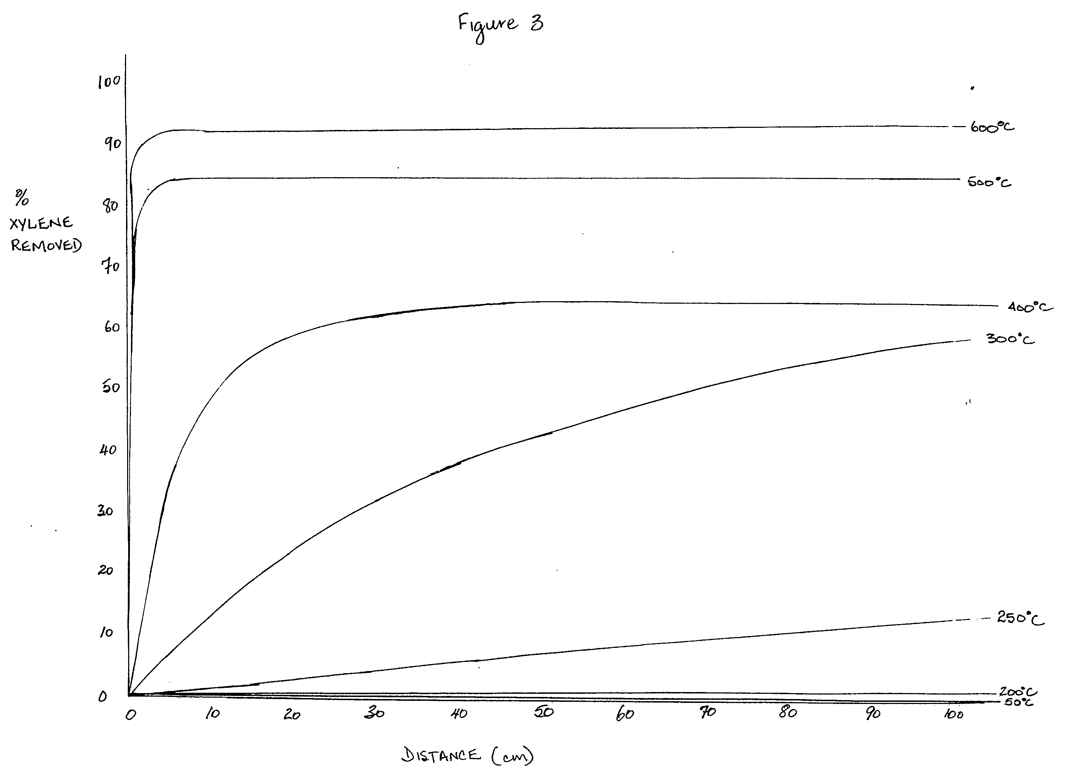

In Figure 3, the initial conditions are:
Air velocity 4.8 m/s, initial xylene concentration of 19.2 ppm and stoichiometric ratio of ozone to xylene of 1.1. From that figure it is clear that removal efficiency does not increase substantially with temperatures above 500°C, and particularly above 800°C. Also, increasing the ozone concentration at above 500°C does not result in increased xylene removal.

In practice, while the addition of ozone to an air stream containing xylene at 250°C would result in some removal of xylene, the process is not efficient and would require contact times or reaction zones that are too long to be practical. Greater than 1:1 ozone/xylene ratios are required for sufficient and practical removal of xylene, but ratios of greater than 10:1 at temperatures between 250°C and 600°C are not required.

In this example, and in all applications of the process described here, the air stream, if it is not already at the desired temperature, may be heated to the desired temperature by any of several methods known in the art.

Example 2

Similar modelling as was carried out for xylene as described above has also been carried out for MEK. An arbitrary air stream was assumed, with specified flow rate, and the same initial conditions, modified for MEK, were specified.

Table 4 shows the reaction mechanism for the high temperature oxidation of methylethylketone (MEK) for the modelling of the MEK oxidation. The variable reactions in Table 4 are input into the computer along with the core reactions noted in Table 1. In Table 4, R is any hydrocarbon chain.

Table 4

Mechanism for High Temperature Oxidation of
Oxidation of Methyl Ethyl Ketone (MEK)

| VARIABLE REACTIONS: | Rate Constant $(CM^3/molecules)$ |
|---|---|
| (1) $OH + MEK \rightarrow R = O + H_2O + HO_2$ | $5.1 \times 10^{-12} \exp(-1041/T)$ |
| (2) $O(^3P) + MEK \rightarrow R=O + OH + HO_2$ | $1.3 \times 10^{-12} \exp(-1140/T)$ |
| (3) $O3 + MEK \rightarrow PRODUCTS$ | $1.97 \times 10^{-21} \exp(-1041/T)$ |
| (4) $R = O + OH \rightarrow END\ PRODUCTS$ $(CO_2 + H_2O)$ | $5.1 \times 10^{-12} \exp(-1041/T)$ |
| (5) $R = O + O(^3P) \rightarrow END\ PRODUCTS$ $(CO_2 + H_2O)$ | $1.3 \times 10^{-12} \exp(-1140/T)$ |

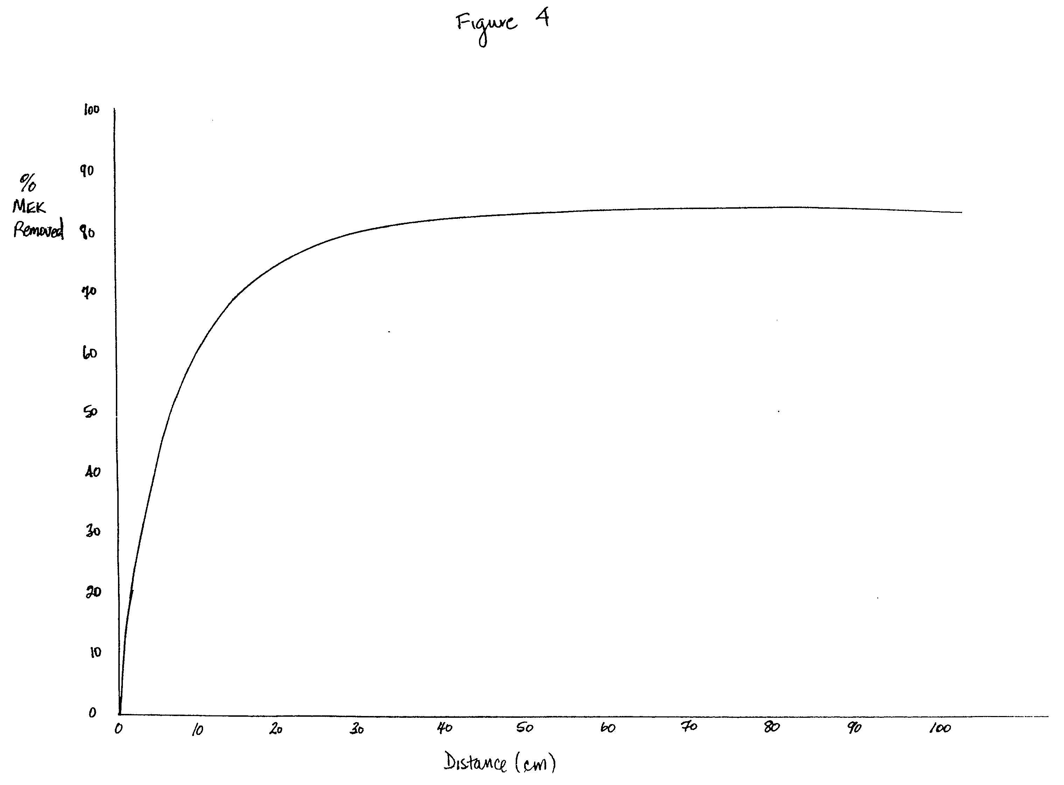

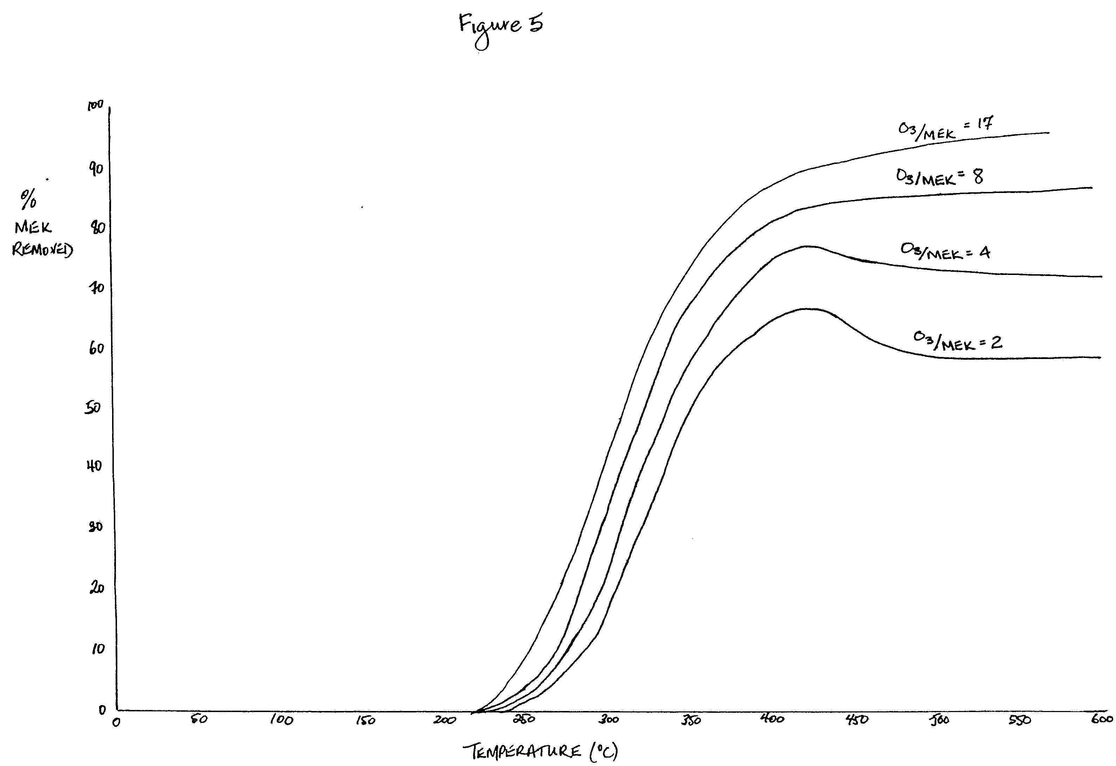

Figures 4 and 5 illustrate the results obtained by modelling the oxidization of MEK. In Figure 4, the initial conditions are:
Air temperature of 400°C, air velocity of 4.8 m/s, initial concentration of MEK of 10 ppm and stoichiometric ratio of ozone to MEK of 11.9. In Figure 5, the initial conditions are:
Air velocity 4.8 m/s, initial concentration of MEK of 10 ppm and a distance travelled of 100cm.

As is clear from the figures, the removal efficiency of MEK only becomes significant above about 350°C. In addition, for stoichiometric ratios of ozone to MEK of below about 6, no additional efficiency is obtained by increasing the temperature above about 400°C. In addition, increasing the stoichiometric ratio of ozone to MEK above about 10 does not significantly increase the removal efficiency of MEK.

At 300°C, MEK has an $O(^3P)$ and OH reaction rate constant of $2 \times 10^{-13}$ $cm^3/mol.sec$. and $8 \times 10^{-13}$ $cm^3/mol.sec$. respectively. With a ratio of ozone to MEK of 2:1 at 300°C, 15% MEK removal is expected at an initial MEK concentration of approximately 10 ppm. With an ozone to MEK ratio of 10:1 at 400°C, greater than 85% MEK is removed in 1 m. at an air velocity of 4.8 mps, as illustrated in Figure 4. Greater than 2:1 ozone to MEK ratios, but not larger than 20:1 at temperatures between 350°C and 400°C are required for sufficient and practical removal of MEK.

**Claims**

1. A method of treating an oxidizable organic contaminant in a gas stream comprising adding ozone to the gas stream to oxidize contaminants having a reaction rate constant at 300°C with O[3P] between about $10^{-11}$ and $10^{-16}$ cm3./mol.sec., the temperature of the gas stream being greater than 250°C and less than 800°C.

2. The method of claim 1 in which the ozone is added to the air stream in a stoichiometric ratio with the oxidizable organic contaminant of between about 1 and 10.

3. The method of claim 2 in which the oxidizable organic contaminant is an aromatic hydrocarbon.

4. The method of claim 3 in which the oxidizable organic contaminant is xylene.

5. The method of claim 1 in which the oxidizable organic contaminant is a ketone.

6. The method of claim 5 in which the oxidizable organic contaminant is methyl ethyl ketone.

7. The method of claim 6 in which the temperature is between about 350°C and 450°C and the stoichiometric ratio of ozone to methyl ethyl ketone is less than about 10.

8. The method of Claim 1 in which the quantity of the ozone added to the gas stream is greater than the amount determined by numerical integration over time of a system of equations modelling the reactions occurring in the gas stream with the condition that a desirable removal efficiency of the oxidizable organic contaminant is obtained.

9. The method of Claim 1 in which the quantity of ozone added to the air stream is greater than the amount determined by numerical integration over time of the model comprising essentially of the following equations:

| Primary Core Inorganic Reactions | Rate Constant Expression $(cm^3/mol.sec.)$ |
|---|---|
| (1) $O_3 + M \rightarrow O(^3P) + O_2 + M$ | $7.65 \times 10^{-9}\ \exp(-24000/RT)$ |
| (2) $O(^3P) + O_2 + M \rightarrow O_3 + M$ | $2.59 \times 10^{-35}\ \exp(1700/RT)[M]$ |
| (3) $OH + OH + M \rightarrow H_2O_2 + M$ | $6.5 \times 10^{-31}\ (T/300)^{-0.7}[M]$ |
| (4) $OH + OH \rightarrow O(^3P) + H_2O$ | $1.05 \times 10^{-11}\ \exp(-1100/RT)$ |
| (5) $OH + H_2O_2 \rightarrow H_2O + HO_2$ | $1.66 \times 10^{-11}\ \exp(-1200/RT)$ |
| (6) $OH + O_3 \rightarrow HO_2 + O_2$ | $1.9 \times 10^{-12}\ \exp(-1000/T)$ |
| (7) $OH + HO_2 \rightarrow H_2O + O_2$ | $3.46 \times 10^{-12}\ \exp(670/T)$ |
| (8) $HO_2 + HO_2 \rightarrow H_2O_2 + O_2$ | $4.5 \times 10^{-14}\ \exp(1200/T)$ |
| (9) $HO_2 + O_3 \rightarrow OH + 2O_2$ | $1.4 \times 10^{-14}\ \exp(-600/T)$ |
| (10) $O(^3P) + O_3 \rightarrow 2O_2$ | $2.0 \times 10^{-11}\ \exp(-4800/RT)$ |
| (11) $H_2O_2 \rightarrow 2OH$ | $*1.0 \times 10^{13}\ \exp(-48000/RT)$ |
| (12) $O(^3P) + H_2O \rightarrow 2OH$ | $1.13 \times 10^{-10}\ \exp(-18400/RT)$ |

(13) $O(^3P) + H_2O_2 \rightarrow OH + HO_2$   $2.56 \times 10^{-12} \exp(-4200/RT)$

(14) $CO + OH \rightarrow H + CO_2$   $1.18 \times 10^{-11} \exp(-3875/T)$

(15) $H + O_2 \xrightarrow{(M)} HO_2$   $2.5 \times 10^{-10}$

| Secondary Core Inorganic Reactions | Rate Constant Expression $cm^3$/mol.sec. |
|---|---|

(16) $NO + O_3 \rightarrow NO_2 + O_2$   $2.35 \times 10^{-12} \exp(-1459)/T$

(17) $NO_2 + O_3 \rightarrow NO_3 + O_2$   $4.27 \times 10^{-13} \exp(-2516/T)$

(18) $NO + OH \xrightarrow{(M)} NO_2 + H$   $1 \times 10^{-11}$

(19) $HO_2 + NO \longrightarrow OH + NO_2$ ,   $2.0 \times 10^{-11} \exp(-604/T)$

(20) $NO + O(^3P) \xrightarrow{(M)} NO_2$   $3.0 \times 10^{-11} (T/300)^{0.3}$

(21) $NO_2 + O(^3P) \xrightarrow{(M)} NO_3$   $2.2 \times 10^{-11}$

(22) $NO_3 + O(^3P) \longrightarrow O_2 + NO_2$   $1.0 \times 10^{-11}$

(23) $NO_2 + OH \longrightarrow HONO_2$   $3.5 \times 10^{-11}$

(24) $OH + HONO_2 \longrightarrow H_2O + NO_3$   $1.5 \times 10^{-14} \exp(650/T)$

(25) $NO_2 + M \rightarrow NO + O(^3P) + M$   $1.8 \times 10^{-8} \exp(-33,000/T)$

(26) $Cl + H_2 \longrightarrow HCl + H$   $4.7 \times 10^{-11} \exp(-2340/T)$

(27) $Cl + HO_2 \longrightarrow HCl + O_2$   $4.8 \times 10^{-11}$

(28) $Cl + H_2O_2 \longrightarrow HCl + HO_2$   $1.1 \times 10^{-11} \exp(-980/T)$

(29) $Cl + O_3 \longrightarrow ClO + O_2$   $3.1 \times 10^{-11} \exp(-302/T)$

(30) $ClO + OH \longrightarrow HO_2 + Cl$   $9.1 \times 10^{-12}$

(31) $ClO + O(^3P) \longrightarrow O_2 + Cl$ '   $7.5 \times 10^{-11} \exp(-120/T)$

(32) $ClO + O_3 \longrightarrow Cl + 2O_2$   $5 \times 10^{-15}$

(33) $SO_2 + OH \xrightarrow{(M)} HOSO_2$   $2.5 \times 10^{-12}$

(34) $SO_2 + O(^3P) \xrightarrow{(M)} SO_3$   $1.4 \times 10^{-14}$

* Unimolecular rate constants, units are $S^{-1}$

11

Variable Reactions [X = Target Contaminant]

```
(1)    OH + X            ⟶    (products)   )
                                           )  PRIMARY OR TARGET
(2)    O(³P) + X         ⟶    (products)   )  CONTAMINANT REACTIONS
                                           )
(3)    O₃ + X            ⟶    (products)   )


(4)    Product 1 + OH    ⟶  END PRODUCTS   )
                                           )
(5)    Product 2 + OH    ⟶  END PRODUCTS   )  OH REACTIONS
         .                                 )
         .                                 )
         .                                 )
(n+3)  Product n + OH    ⟶  END PRODUCTS   )


(n+4)  Product 1 + O(³P) ⟶  END PRODUCTS   )
                                           )
(n+5)  Product 2 + O(³P) ⟶  END PRODUCTS   )  O(³P) REACTIONS
         .                                 )
         .                                 )
         .                                 )
(2n+3) Product n + O(³P) ⟶  END PRODUCTS   )


(2n+4) Product 1 + O₃    ⟶  END PRODUCTS   )
                                           )
(2n+5) Product 2 + O₃    ⟶  END PRODUCTS   )  O₃ REACTIONS
         .                                 )
         .                                 )
         . .                               )
(3n+3) Product n + O₃    ⟶  END PRODUCTS   )
```

Where T is the temperature of the air stream, R is 1.987 cal/mol.K, M is any molecular species and the variable equations are those for the particular contaminant to be removed, with the condition that a desirable removal efficiency of the oxidizable organic contaminant is obtained.

10. The method of Claim 9 in which the oxidizable organic contaminant is xylene and the variable reactions are:

|  | | Rate Constant ($cm^3$/mol.sec.) |
|---|---|---|
| (1) | OH + Xylene $\rightarrow$ 0.056 TLA + 0.334 $HO_2$ + 0.278 PHEN + 0.556 PAR + 1.332 MGLY | $8.33 \times 10^{-12} \exp\left(\dfrac{627}{RT}\right)$ |
| (2) | $O(^3P)$ + Xylene $\rightarrow$ 0.056 TLA + 0.334 $HO_2$ 0.278 PHEN + 0.556 PAR + 1.332 MGLY | $3.78 \times 10^{-11} \exp\left(\dfrac{-1350}{T}\right)$ |
| (3) | $O_3$ + Xylene $\rightarrow$ PRODUCTS ($CO_2$ + $H_2O$) | $5.6 \times 10^{-20} \exp\left(\dfrac{-2200}{RT}\right)$ |
| (4) | TLA + OH $\rightarrow$ END PRODUCTS ($CO_2$) + $H_2O$) | $1.3 \times 10^{-11}$ |
| (5) | PHEN + OH $\rightarrow$ END PRODUCTS ($CO_2$ + $H_2O$) | $5.0 \times 10^{-11}$ |
| (6) | PAR + OH $\rightarrow$ END PRODUCTS ($CO_2$ + $H_2O$) | $4.8 \times 10^{-12} \exp(129/T)$ |
| (7) | MGLY + OH $\rightarrow$ END PRODUCTS ($CO_2$ + $H_2O$) | $1.73 \times 10^{-11}$ |
| (8) | TLA + $O(^3P)$ $\rightarrow$ END PRODUCTS ($CO_2$ + $H_2O$) | $8.3 \times 10^{-12} \exp\left(\dfrac{-2700}{RT}\right)$ |
| (9) | PHEN + $O(^3P)$ $\rightarrow$ END PRODUCTS ($CO_2$ + $H_2O$) | $8.3 \times 10^{-12} \exp\left(\dfrac{-2700}{RT}\right)$ |
| (10) | PAR + $O(^3P)$ $\rightarrow$ END PRODUCTS ($CO_2$ + $H_2O$) | $2.2 \times 10^{-14} \exp\left(\dfrac{-4170}{RT}\right)$ |
| (11) | MGLY + $O(^3P)$ $\rightarrow$ END PRODUCTS ($CO_2$ + $H_2O$) | $5.1 \times 10^{-14} \exp\left(\dfrac{-2099}{T}\right)$ |

Where TLA is toluenealdehyde, PHEN is a phenol-type product, PAR is a paraffin radical and MGLY is a methyl glyoxal radical.

11. The method of claim 9 in which the oxidizable organic contaminant is methyl ethyl ketone (MEK) and the variable reactions are

|  | | Rate Constant $(CM^3/molecules)$ |
|---|---|---|
| (1) | $OH + MEK \rightarrow R = O + H_2O + HO_2$ | $5.1 \times 10^{-12} \exp(-1041/T)$ |
| (2) | $O(^3P) + MEK \rightarrow R=O + OH + HO_2$ | $1.3 \times 10^{-12} \exp(-1140/T)$ |
| (3) | $O3 + MEK \rightarrow PRODUCTS$ | $1.97 \times 10^{-21} \exp(-1041/T)$ |
| (4) | $R = O + OH \rightarrow END\ PRODUCTS$ $(CO_2 + H_2O)$ | $5.1 \times 10^{-12} \exp(-1041/T)$ |
| (5) | $R = O + O(^3P) \rightarrow END\ PRODUCTS$ $(CO_2 + H_2O)$ | $1.3 \times 10^{-12} \exp(-1140/T)$ |

Where $R = O$ is methyl methyl di ketone.

12. The method of claim 11 in which the temperature is between 350°C and the stoichiometric ratio of ozone to metheylethylketone is less than about 10.

Figure 1

Figure 2

% Xylene Removed

Temperature (°C)

Figure 3

Figure 4

EP 0 314 482 A1

Figure 5

European Patent Office

**EUROPEAN SEARCH REPORT**

Application Number

EP 88 31 0124

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-C-1 062 394 (F. HERBERICH) * claim 1; column 3, lines 5-38 * | 1 | B 01 D 53/34 |
| A | CHEMISTRY AND INDUSTRY 16th November 1974, pages 899-902; D.L.B. ARNOLD: "Chemical oxidation of odours by ozone" * page 900, left column, line 11 - right column, line 24 * | 1 | |
| A | DE-A-3 308 335 (KALI-CHEMIE AG) * complete document * | | |

TECHNICAL FIELDS SEARCHED (Int. Cl.4)

B 01 D 53/00

The present search report has been drawn up for all claims

| Place of search | Date of completion of the search | Examiner |
|---|---|---|
| BERLIN | 16-12-1988 | BERTRAM H E H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P0401)